# EUROPÄISCHE PATENTSCHRIFT

(11) **EP 3 652 801 B1**
(45) Veröffentlichungstag und Bekanntmachung des Hinweises auf die Patenterteilung: **03.01.2024**
(21) Anmeldenummer: 18753057.1
(22) Anmeldetag: 09.07.2018
(51) Int. Cl.: H01M 8/2475

(54) **BRENNSTOFFZELLENVORRICHTUNG**
FUEL CELL DEVICE
ENSEMBLE PILE À COMBUSTIBLE

(30) Priorität: 14.07.2017 DE 102017115878
(43) Veröffentlichungstag der Anmeldung: 20.05.2020
(73) Patentinhaber: EKPO Fuel Cell Technologies GmbH, 72581 Dettingen (DE)
(72) Erfinder: KRAFT, Jürgen, 72555 Metzingen (DE); GÖTZ, Michael, 72581 Dettingen/Erms (DE); MORCOS, Manuel, 72076 Tübingen (DE)
(74) Vertreter: Hoeger, Stellrecht & Partner Patentanwälte mbB
(86) Internationale Anmeldenummer: PCT/EP2018/068559
(87) Internationale Veröffentlichungsnummer: WO 2019/011866

(56) Entgegenhaltungen:
- DE-A1-102006 049 031
- US-A1- 2004 241 521
- US-A1- 2006 134 470
- US-A1- 2010 015 503

## Beschreibung

Die vorliegende Erfindung betrifft eine Brennstoffzellenvorrichtung, welche einen Brennstoffzellenstapel, der mehrere in einer Stapelrichtung aufeinanderfolgende Brennstoffzelleneinheiten umfasst, und zwei Endplatten, zwischen denen der Brennstoffzellenstapel angeordnet ist, umfasst.

Solche Brennstoffzellenstapel werden üblicherweise zusammen mit peripheren Systemkomponenten, wie beispielsweise einer Oxidationsmittelversorgungseinrichtung, einer Kühleinrichtung und einer Brenngasversorgungseinrichtung, in einem zwangsdurchlüfteten Einbauraum der Systemumgebung, beispielsweise eines Fahrzeugs oder eines Notfall-Stromversorgungssystems, angeordnet. Dabei sorgt die Zwangsdurchlüftung dafür, dass auch in einem Fehlerfall, in dem Wasserstoff aus dem System freigesetzt wird, die Bildung eines explosiven Luft/Gas-Gemisches und das damit verbundene Explosionsrisiko verhindert wird.

Durch die Zwangsdurchlüftung sind die Komponenten der Brennstoffzellenvorrichtung Umwelteinflüssen ausgesetzt. Durch den Eintrag von Staub, Verschmutzungen, Feuchtigkeit oder Wasser können sich entsprechende Ablagerungen auf den Komponenten der Brennstoffzellenvorrichtung, insbesondere auf dem Brennstoffzellenstapel, bilden. Der Brennstoffzellenstapel muss vor solchen Ablagerungen geschützt werden, da sich keine elektrisch leitfähige Schicht über die Brennstoffzelleneinheiten des Brennstoffzellenstapels hinweg ausbilden soll. Eine solche elektrisch leitfähige Schicht könnte insbesondere über Kriechströme zu einem parasitären Stromverbrauch, einer zusätzlichen Wärmeentwicklung und/oder einer Beeinflussung der Zellspannungsmessung führen und die Brennstoffzellenvorrichtung in unerwünschter Weise beeinträchtigen.

Auch eine Schicht aus Ablagerungen, die nicht elektrisch leitfähig ist, kann schädlich sein, da hierdurch beispielsweise im Falle der Kondensation von Wasser aus der Luft der Brennstoffzellenstapel deutlich länger feucht bleibt als bei Abwesenheit solcher Ablagerungen, was an Komponenten der Brennstoffzellenvorrichtung zu Störungen, insbesondere zu erhöhter Korrosion, führen kann.

Die Bildung von Ablagerungen an den Komponenten der Brennstoffzellenvorrichtung soll daher möglichst vermieden werden.

Es ist aus der US 2009/0191805 A1 bekannt, ein Zwangsdurchlüftungssystem für eine Brennstoffzellenvorrichtung mit einem Filter zu betreiben, das den Eintrag von Staub in die Brennstoffzellenvorrichtung verhindert. Der Einsatz eines Filters ist aber mit einem erhöhten Druckverlust der Zwangsdurchlüftung und mit einer entsprechend höheren Leistungsaufnahme des die Zwangsdurchlüftung antreibenden Gebläses verbunden. Ferner verursacht die Wartung des Filters einen unerwünschten Mehraufwand. Insbesondere bei Anwendungen mit starker Staub- und/oder Schmutzbelastung ist der Einsatz eines Filters in einem Zwangsdurchlüftungssystem mit sehr hohem Wartungsaufwand verbunden.

In der US 2004/0023095 A1 wird vorgeschlagen, Bipolarplatten eines Brennstoffzellenstapels mit einer Umrandung aus einem elektrisch isolierenden polymerbasierten Material zu fertigen.

Ferner ist es bekannt, einen Brennstoffzellenstapel vollständig in ein elektrisch isolierendes Vergießmaterial einzugießen. Ein solches Vergießen des Brennstoffzellenstapels ist jedoch mit einem hohen Aufwand und hohen Kosten verbunden. Ferner erschwert es den Zugang zu den einzelnen Brennstoffzelleneinheiten des Brennstoffzellenstapels und insbesondere einen Austausch derselben. Wenn ein Bereich an den Außenflächen der Brennstoffzelleneinheiten von Vergießmaterial freigehalten wird, um eine Einzelzellspannungsmessung zu ermöglichen, so können in diesem Bereich weiterhin die vorstehend geschilderten Probleme auftreten.

Die DE 10 2006 049 031 A1 offenbart eine Brennstoffzellenvorrichtung gemäß dem Oberbegriff von Anspruch 1.

Die US 2004/241521 A1 offenbart eine versiegelte Brennstoffzellenvorrichtung, die zwei Elektrodenanordnungen umfasst, welche jeweils eine Kathode, eine Anode und eine dazwischen angeordnete Elektrolyt-Kammer zur Aufnahme eines flüssigen Elektrolyten umfassen, und eine zwischen den Elektrodenanordnungen angeordnete Brennstoffkammer zur Aufnahme eines flüssigen Brennstoffs, wobei mittels einer Wiederbefüllvorrichtung unverbrauchter flüssiger Brennstoff und frischer Elektrolyt in die Kammern der Brennstoffzellenvorrichtung eingefüllt werden kann, wenn der flüssige Brennstoff in der Brennstoffkammer der Brennstoffzellenvorrichtung verbraucht ist.

Der vorliegenden Erfindung liegt die Aufgabe zugrunde, eine Brennstoffzellenvorrichtung der eingangs genannten Art zu schaffen, bei welcher schädliche Auswirkungen von aus den Brennstoffzelleneinheiten austretendem Wasserstoff vermieden werden, ohne dass dies den Zugang zu den Brennstoffzelleneinheiten unmöglich macht oder einen unverhältnismäßig großen Wartungsaufwand mit sich bringt.

Diese Aufgabe wird durch eine Brennstoffzellenvorrichtung nach Anspruch 1 gelöst.

Das freie Restvolumen, das innerhalb der Einhausung zwischen der Einhausung, dem Brennstoffzellenstapel und den Endplatten verbleibt, ist vorzugsweise kleiner als 10 %, insbesondere kleiner als 5 %, des Innenvolumens der Einhausung.

Das Innenvolumen der Einhausung ist dabei das Volumen, das nach außen hin durch die Einhausung begrenzt wird; das Volumen der Einhausung selbst zählt also nicht zu dem Innenvolumen der Einhausung.

Vorzugsweise ist das innerhalb der Einhausung verbleibende freie Restvolumen so klein, dass ein tertiärer Explosionsschutz für die Brennstoffzellenvorrichtung gewährleistet ist. Dies bedeutet, dass auch dann, wenn ein explosionsfähiges Gemisch, insbesondere ein wasserstoffhaltiges Gemisch, in dem freien Restvolumen innerhalb der Einhausung vorhanden ist und dieses Gemisch tatsächlich gezündet wird, das freie Restvolumen, in dem die Explosion stattfindet, so klein und/oder so in kleine Einzelvolumina unterteilt ist, dass der Brennstoffzellenstapel und die Einhausung durch die Explosion nicht beschädigt werden und somit die Brennstoffzellenvorrichtung auch nach einer Explosion ihre volle Funktionsfähigkeit behält.

Ferner ist es günstig, wenn die Einhausung gegen das Eindringen von Schmutz und/oder Feuchtigkeit in den Innenraum der Einhausung abgedichtet ist.

Insbesondere kann vorgesehen sein, dass die Einhausung so ausgebildet ist, dass sie mindestens der Schutzart IP6X gemäß der DIN EN 60529 entspricht.

Die Dichtheit der Einhausung entsprechend der geforderten Schutzklasse kann beispielsweise durch Labyrinthdichtungen, Dichtring-Anordnungen, Fasereinlagen, Bürsten oder Ähnliches erreicht werden.

Ferner ist vorzugsweise vorgesehen, dass die Einhausung so ausgebildet ist, dass sie mindestens dem Wasserschutzgrad 4, insbesondere mindestens dem Wasserschutzgrad 5, besonders bevorzugt mindestens dem Wasserschutzgrad 6, höchst bevorzugt mindestens dem Wasserschutzgrad 7, gemäß der DIN EN 60529 entspricht.

Um das innerhalb der Einhausung verbleibende Restvolumen möglichst gering zu halten, ist es günstig, wenn der Abstand zwischen der Außenseite des Brennstoffzellenstapels und der Innenseite der Einhausung senkrecht zu der Stapelrichtung im Wesentlichen überall kleiner ist als 5 mm, vorzugsweise kleiner ist 2 mm, besonders bevorzugt kleiner ist als 1 mm.

Ferner kann vorgesehen sein, dass die Einhausung zur Reduzierung des innerhalb der Einhausung verbleibenden Restvolumens ein Füllmaterial umfasst.

Insbesondere kann vorgesehen sein, dass die Einhausung ein Schaummaterial, vorzugsweise ein geschlossenporiges Schaummaterial, beispielsweise ein Silikonschaummaterial, umfasst.

Das Schaummaterial ist vorzugsweise kompressibel und passt sich vorzugsweise gut an die Außenkontur des Brennstoffzellenstapels und an die Innenkontur eines Grundkörpers der Einhausung an.

Bei einer bevorzugten Ausgestaltung der Erfindung ist vorgesehen, dass die Einhausung ein oder mehrere Außenschalenelemente aus einem thermoplastischen Material oder aus einem Organoblech-Material umfasst.

Das thermoplastische Material kann beispielsweise ein PVDF(Polyvinylidenfluorid)-Material und/oder ein, vorzugsweise glasfaserverstärktes, Polyamid(PA)-Material umfassen.

Mindestens ein Außenschalenelement der Einhausung kann beispielsweise in einem formgebenden Verfahren, insbesondere in einem Spritzgießverfahren oder in einem Thermoform-Verfahren, hergestellt sein.

Ferner kann die Einhausung ein Sandwichmaterial umfassen.

Besonders günstig ist es, wenn die Einhausung ein Material umfasst, das mindestens der Brandschutzklasse V0 entspricht.

Insbesondere kann vorgesehen sein, dass die Einhausung im Wesentlichen vollständig aus einem Material besteht, dass mindestens der Brandschutzklasse V0 entspricht.

Um auch im Fehlerfall bei einer Leckage des Brennstoffzellenstapels zu verhindern, dass sich innerhalb der Einhausung ein Überdruck aufbaut und zu einer Gefährdung führt, weist die Einhausung vorzugsweise eine Gasaustauschöffnung und/oder ein Gasaustauschventil auf. Durch die Gasaustauschöffnung oder das Gasaustauschventil kann Gas, insbesondere Wasserstoff, aus dem Innenraum der Einhausung in die Umgebung der Einhausung und der Brennstoffzellenvorrichtung entweichen.

Das Gasaustauschventil ist vorzugsweise als ein Rückschlagventil ausgebildet, welches ein Entweichen von Gas aus dem Innenraum der Einhausung in den Außenraum ermöglicht, aber ein Eindringen von Gas, Feuchtigkeit und/oder Verschmutzungen aus dem Außenraum in den Innenraum der Einhausung verhindert.

Die Gasaustauschöffnung ist vorzugsweise so klein ausgebildet, dass das Eindringen von Feuchtigkeit und/oder Verschmutzungen aus dem Außenraum in den Innenraum der Einhausung durch die Gasaustauschöffnung weitgehend vermieden wird.

Um ein Abfließen von aus dem Brennstoffzellenstapel austretender, sich zwischen der Einhausung und dem Brennstoffzellenstapel sammelnder oder in dem Zwischenraum zwischen der Einhausung und dem Brennstoffzellenstapel kondensierender Flüssigkeit aus der Einhausung zu ermöglichen, ist vorzugsweise vorgesehen, dass die Einhausung eine Flüssigkeitsaustrittsöffnung und/oder ein Flüssigkeitsaustrittsventil aufweist.

Eine solche Flüssigkeitsaustrittsöffnung und/oder ein solches Flüssigkeitsaustrittsventil kann an eine Flüssigkeitsabführleitung angeschlossen sein.

Die Flüssigkeitsabführleitung kann insbesondere als eine Rohrleitung oder als eine Schlauchleitung ausgebildet sein.

Die Flüssigkeitsabführleitung kann die Flüssigkeitsaustrittsöffnung und/oder das Flüssigkeitsaustrittsventil mit einer außerhalb der Einhausung angeordneten Flüssigkeitssammeleinrichtung verbinden.

Das Flüssigkeitsaustrittsventil kann als ein Rückschlagventil ausgebildet sein, um zu vermeiden, dass Gas, Feuchtigkeit und/oder Verschmutzungen durch das Flüssigkeitsaustrittsventil aus dem Außenraum in den Innenraum der Einhausung eindringen.

Die Flüssigkeitsaustrittsöffnung ist vorzugsweise so klein ausgebildet, dass ein Eindringen von Feuchtigkeit und/oder Verschmutzungen aus dem Außenraum in den Innenraum der Einhausung durch die Flüssigkeitsaustrittsöffnung hindurch weitgehend vermieden wird.

Bei der Erfindung ist vorgesehen, dass die Einhausung an mindestens einer Endplatte mittels mindestens einer Befestigungsanordnung festgelegt ist.

Eine solche Befestigungsanordnung kann insbesondere eine Schraube, eine Federscheibe, eine Unterlegscheibe und/oder einen Kappring umfassen.

Ferner ist vorgesehen, dass die Brennstoffzellenvorrichtung mindestens eine Abdeckkappe zum Abdecken einer Befestigungsanordnung, vorzugsweise von der Außenseite der Einhausung her, umfasst.

Die Einhausung ist vorzugsweise von dem Brennstoffzellenstapel lösbar.

Bei einer bevorzugten Ausgestaltung der Erfindung ist vorgesehen, dass die Einhausung einen Grundkörper und einen Deckel umfasst.

Der Grundkörper kann aus mehreren Schalenelementen zusammengesetzt sein, um die Montage des Grundkörpers an den Endplatten und an dem Brennstoffzellenstapel zu erleichtern.

Die Medienanschlüsse des Brennstoffzellenstapels, insbesondere die Anschlüsse für die Zufuhr von Brenngas, für die Zufuhr von Oxidationsmittel, für die Abfuhr von Anodenabgas und für die Abfuhr von Kathodenabgas sowie gegebenenfalls für die Zufuhr und die Abfuhr von Kühlmittel, sind vorzugsweise durch jeweils eine der Endplatten der Brennstoffzellenvorrichtung hindurchgeführt.

Die Einhausung umschließt den Brennstoffzellenstapel und ist in geeigneter Weise an die Endplatten angebunden.

Die Einhausung ist vorzugsweise aus einem elektrisch isolierenden Material gebildet.

Alternativ hierzu kann auch ein elektrisch leitfähiges Material mit einer isolierenden Beschichtung als Material für die Einhausung eingesetzt werden, oder ein mehrlagiges Material mit mindestens einer isolierenden Außenlage, vorzugsweise mit zwei isolierenden Außenlagen.

Insbesondere an der Innenseite der Einhausung ist vorzugsweise eine elektrisch isolierende Materiallage vorgesehen.

Bei geeigneter Anbindung an die Endplatten kann die Außenseite der Einhausung elektrisch leitfähig ausgebildet sein.

Bei einer besonderen Ausführungsform der Erfindung ist die Einhausung nur an einer der beiden Endplatten festgelegt, während sich die Einhausung relativ zu der zweiten Endplatte in einer Abdeckung bewegen kann, so dass Längenveränderungen des Brennstoffzellenstapels aufgrund thermischer Effekte und/oder aufgrund von Fertigungstoleranzen ausgeglichen werden können. Die Abdeckung stellt dabei die erforderliche Dichtheit sicher.

Die Abdeckung kann als ein separater Deckel ausgebildet sein, oder eine der Endplatten kann die Funktion der Abdeckung übernehmen.

Die Brennstoffzellenvorrichtung kann eine innerhalb der Einhausung angeordnete Zellspannungsüberwachungseinheit umfassen.

Durch die Einhausung ist auch ein Berührschutz für den Brennstoffzellenstapel gewährleistet.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine perspektivische Darstellung einer Brennstoffzellenvorrichtung, welche einen Brennstoffzellenstapel, der mehrere in einer Stapelrichtung aufeinanderfolgende Brennstoffzelleneinheiten umfasst, zwei Endplatten, zwischen denen der Brennstoffzellenstapel angeordnet ist, eine Spannvorrichtung zum Verspannen der beiden Endplatten gegeneinander und eine Einhausung, welche den Brennstoffzellenstapel und die Endplatten umgibt, umfasst;

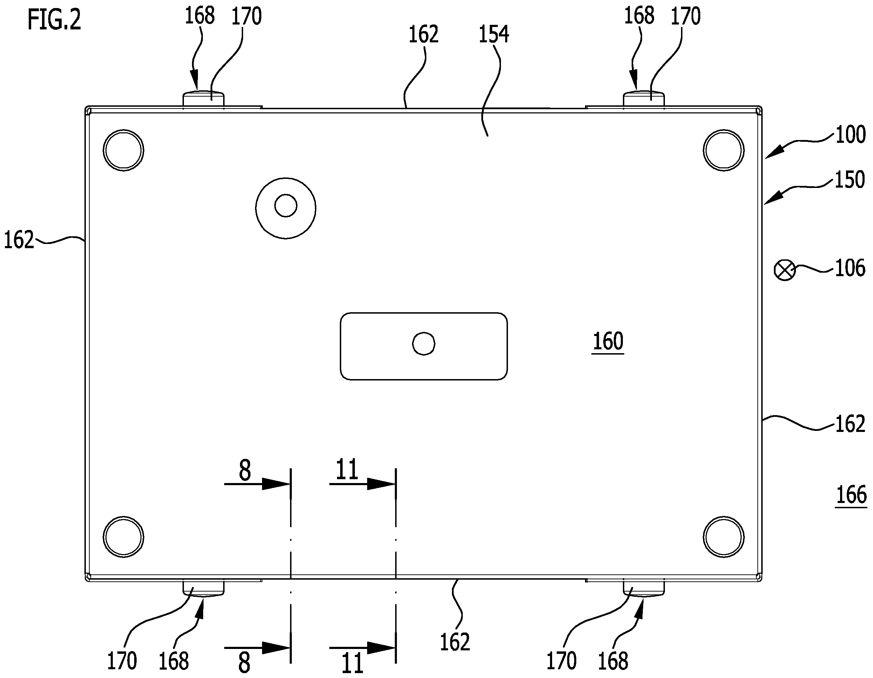

- Fig. 2: eine Draufsicht auf die Brennstoffzellenvorrichtung aus Fig. 1 von oben;

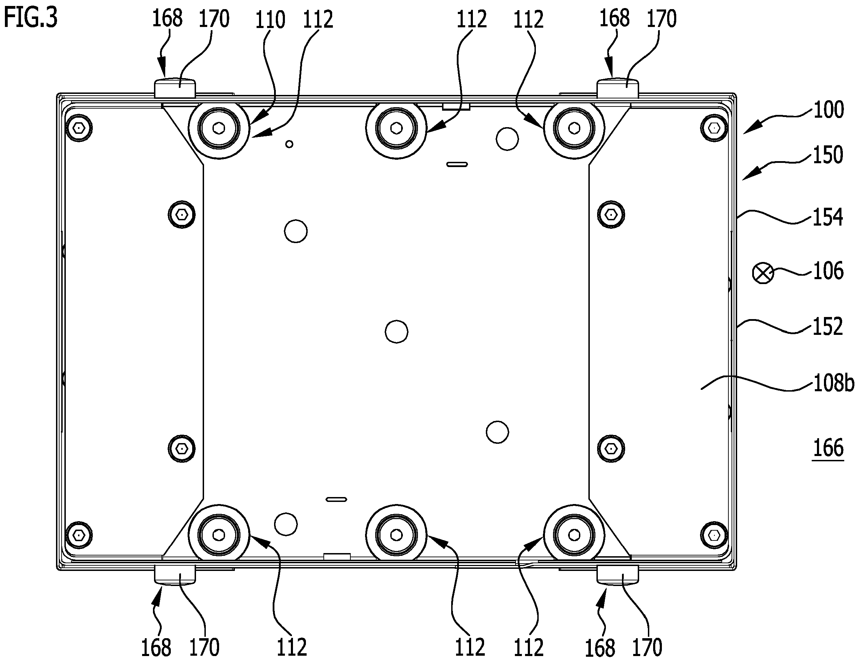

- Fig. 3: eine Draufsicht auf die Brennstoffzellenvorrichtung aus den Fig. 1 und 2 von unten;
- Fig. 4: eine perspektivische Darstellung der Brennstoffzellenvorrichtung aus Fig. 1, nachdem ein Deckel der Einhausung abgenommen worden ist;

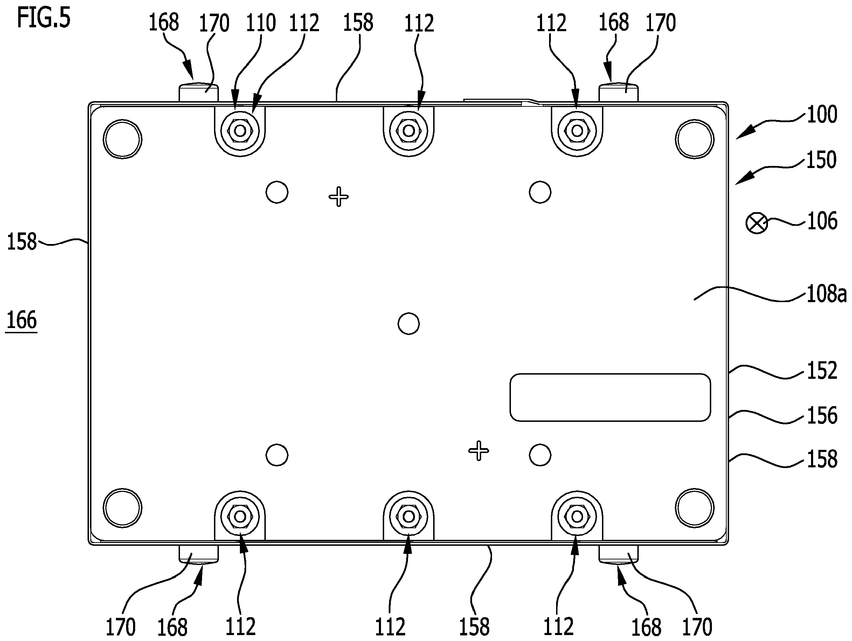

- Fig. 5: eine Draufsicht auf die Brennstoffzellenvorrichtung bei abgenommenen Deckel aus Fig. 4 von oben;
- Fig. 6: eine perspektivische Darstellung der Brennstoffzellenvorrichtung aus Fig. 4, nachdem auch ein Grundkörper der Einhausung abgenommen worden ist;
- Fig. 7: eine perspektivische Darstellung der Brennstoffzellenvorrichtung aus Fig. 6, nachdem Schaummaterial-Elemente der Einhausung entfernt worden sind;
- Fig. 8: einen Schnitt durch die Brennstoffzellenvorrichtung aus den Fig. 1 bis 3 im Bereich eines Spannelements der Spannvorrichtung, längs der Stapelrichtung des Brennstoffzellenstapels und längs der Linie 8 - 8 in Fig. 2;
- Fig. 9: eine vergrößerte Darstellung des Bereichs I aus Fig. 8;
- Fig. 10: eine vergrößerte Darstellung des Bereichs II aus Fig. 8; und
- Fig. 11: einen Schnitt durch die Brennstoffzellenvorrichtung aus den Fig. 1 bis 3 im Bereich eines Schaummaterial-Elements der Einhausung, längs der Stapelrichtung des Brennstoffzellenstapels und längs der Linie 11 - 11 in Fig. 2.

Gleiche oder funktional äquivalente Elemente sind in allen Figuren mit denselben Bezugszeichen bezeichnet.

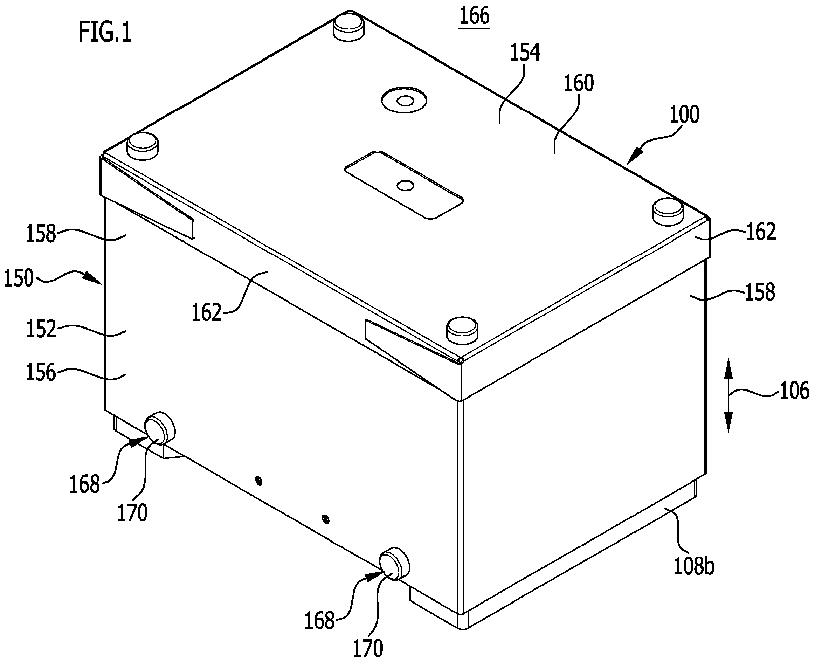

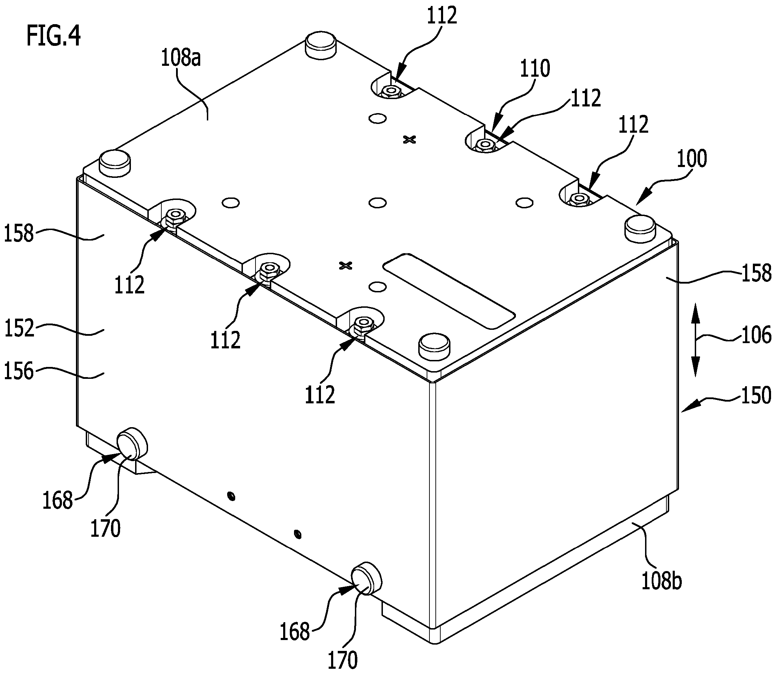

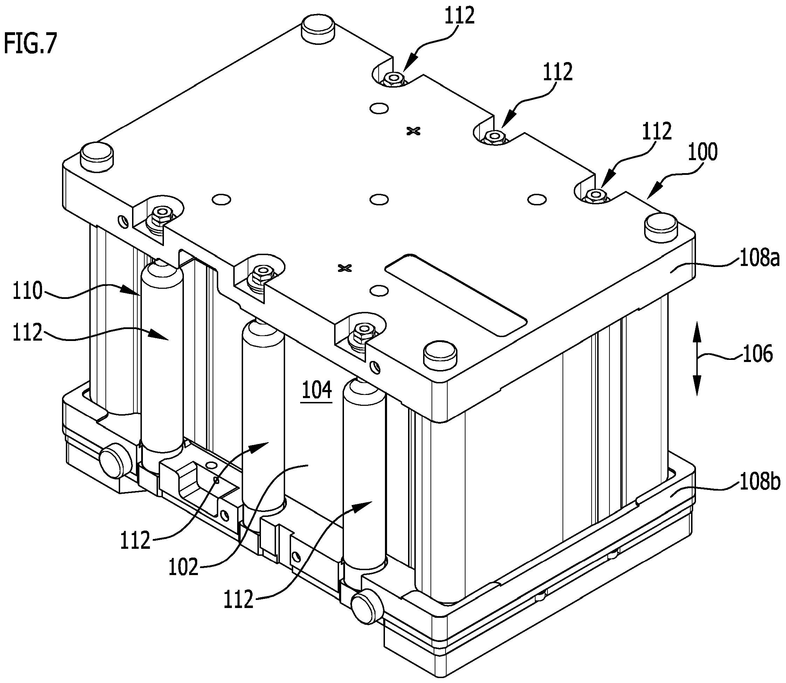

Eine in den Fig. 1, 4, 6 und 7 in verschiedenen Montagestufen dargestellte, als Ganzes mit 100 bezeichnete Brennstoffzellenvorrichtung umfasst einen Brennstoffzellenstapel 102, welcher in Fig. 7 nur schematisch mit seiner einhüllenden Außenkontur 104 dargestellt ist. Dieser Brennstoffzellenstapel 102 umfasst mehrere in einer Stapelrichtung 106 aufeinanderfolgende Brennstoffzelleneinheiten (die in Fig. 7 nicht einzeln dargestellt sind).

Ferner umfasst die Brennstoffzellenvorrichtung 100 zwei Endplatten 108a und 108b, zwischen denen der Brennstoffzellenstapel 102 angeordnet ist, und eine Spannvorrichtung 110, mittels welcher die beiden Endplatten 108a und 108b längs der Stapelrichtung 106 gegeneinander verspannbar sind, um den zwischen den Endplatten 108a, 108b angeordneten Brennstoffzellenstapel 102 mit einer Einspannkraft zu beaufschlagen.

Die Spannvorrichtung 110 umfasst eine oder mehrere, beispielsweise vier oder mehr, insbesondere sechs oder mehr, Spannelemente 112, welche beispielsweise im äußeren Randbereich der Endplatte 108a und der Endplatte 108b angeordnet sind.

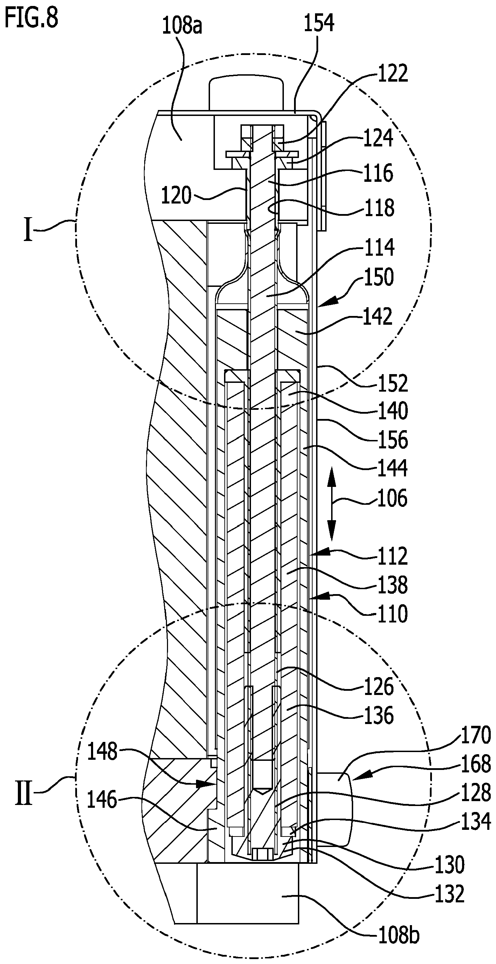

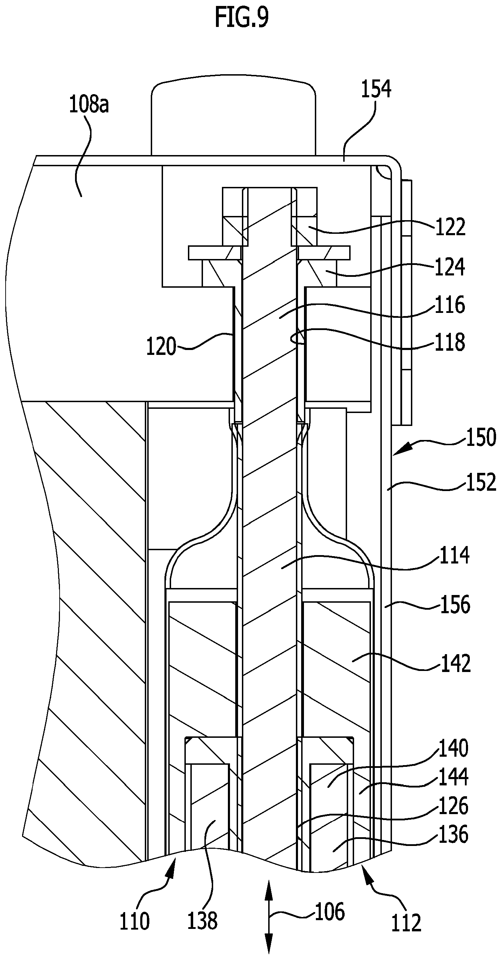

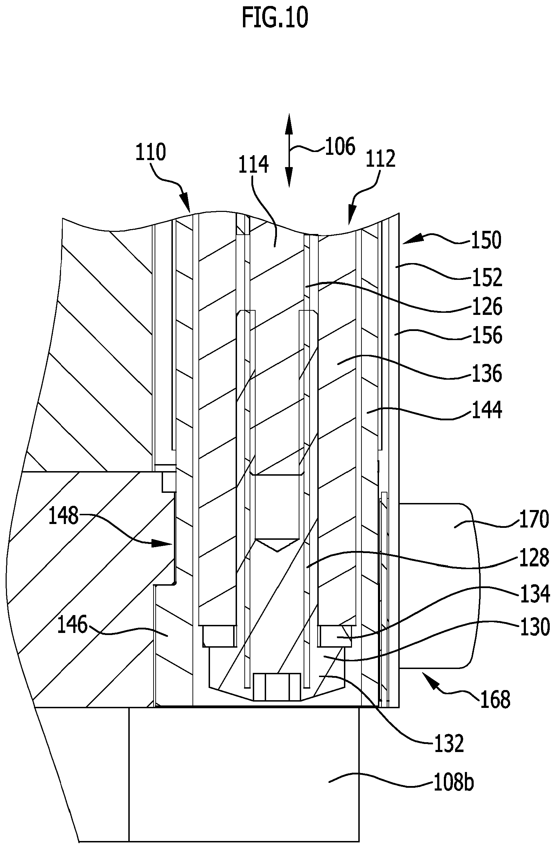

Eine Möglichkeit für den Aufbau eines solchen Spannelements 112 ist aus den Fig. 8 bis 10 zu ersehen.

Bei diesem beispielhaften Aufbau umfasst das Spannelement 112 eine Spannschraube 114, deren Schaft 116 sich parallel zur Stapelrichtung 106 durch eine Durchtrittsöffnung 118 in der Endplatte 108a hindurch erstreckt.

Dabei kann die Spannschraube 114 mittels einer Führungsbuchse 120, welche in die Durchtrittsöffnung 118 der Endplatte 108a eingesetzt ist, an der Endplatte 108a geführt sein.

Ein Schraubenkopf 122 der Spannschraube 114 kann dabei auf einem Bund 124 der Führungsbuchse 120 aufliegen.

Ein an dem Schaft 116 der Spannschraube 114 vorgesehenes Außengewinde 126 steht in Eingriff mit einem hierzu komplementären Innengewinde 128 einer Hohlschraube 130.

An einer der Endplatte 108a zugewandten Seite eines Kopfes 132 der Hohlschraube 130 stützt sich ein erster Endbereich 134 eines elastischen Elements 136, beispielsweise in Form eines Federelements 138, insbesondere einer Druck-Schraubenfeder, ab.

Ein dem ersten Endbereich 134 des elastischen Elements 136 abgewandter zweiter Endbereich 140 des elastischen Elements 136 stützt sich an einem der Endplatte 108a zugewandten Endbereich 142 einer Spannhülse 144 ab.

Ein dem ersten Endbereich 142 abgewandter zweiter Endbereich 146 der Spannhülse 144 hintergreift einen Vorsprung 148 der Endplatte 108b.

Die Endplatte 108b wird somit von dem Spannelement 112 mit einer Einspannkraft, welche der elastischen Rückstellkraft des elastischen Elements 136 entspricht, gegen die Endplatte 108a gezogen.

Durch Eindrehen des Außengewindes 126 der Spannschraube 114 in das Innengewinde 128 der Hohlschraube 130 wird diese Einspannkraft erhöht; durch Ausdrehen des Außengewindes 126 der Spannschraube 114 aus dem Innengewinde 128 der Hohlschraube 130 wird diese Einspannkraft verringert.

Die gesamte Einspannkraft, durch welche die Endplatten 108a und 108b mittels der Spannvorrichtung 110 gegeneinander verspannt werden und mit welcher der zwischen den Endplatten 108a und 108b angeordnete Brennstoffzellenstapel 102 beaufschlagt wird, entspricht der Summe der von den Spannelementen 112 der Spannvorrichtung 110 erzeugten Einspannkräfte.

Die Brennstoffzellenvorrichtung 100 umfasst ferner eine Einhausung 150, welche den Brennstoffzellenstapel 102 und die Endplatten 108a, 108b umgibt.

Wie aus Fig. 1 zu ersehen ist, umfasst die Einhausung 150 einen Grundkörper 152 und einen Deckel 154.

Der Grundkörper 152 kann insbesondere ein Außenschalenelement 156 umfassen, welches beispielsweise ringförmig geschlossen ausgebildet sein kann und vorzugsweise mehrere, beispielsweise vier, Seitenwände 158 umfasst.

Das Außenschalenelement 156 kann beispielsweise aus einem thermoplastischen Material, insbesondere aus einem PVDF(Polyvinylidenfluorid)-Material oder aus einem, vorzugsweise glasfaserverstärkten, PA(Polyamid)-Material, oder aus einem Organoblech-Material gebildet sein.

Der Grundkörper 152 kann aus mehreren, beispielsweise zwei, Außenschalenelementen 156 zusammengesetzt sein, um die Montage des Grundkörpers 152 an den Endplatten 108a, 108b und an dem Brennstoffzellenstapel 102 zu erleichtern.

Der Deckel 154 der Einhausung 150 kann eine, beispielsweise im Wesentlichen quaderförmige, Abdeckplatte 160 und eine oder mehrere, beispielsweise vier, sich vorzugsweise im Wesentlichen rechtwinklig von der Abdeckplatte 160 weg erstreckende Seitenwände 162 aufweisen.

Die lichte Weite des Deckels 154 zwischen den Seitenwänden 162 des Deckels 154 ist vorzugsweise geringfügig größer als die Außenkontur des Grundkörpers 152 an dessen oberem Rand, so dass der Deckel 154 über den oberen Randbereich des Grundkörpers 152 gestülpt werden kann.

Der Deckel 154 kann aus einem thermoplastischen Material, insbesondere aus einem PVDF(Polyvinylidenfluorid)-Material oder aus einem, vorzugsweise glasfaserverstärkten, PA(Polyamid)-Material, oder aus einem Organoblech-Material gebildet sein.

Das Material des Deckels 154 kann von dem Material des Grundkörpers 152 verschieden oder mit dem Material des Grundkörpers 152 identisch sein.

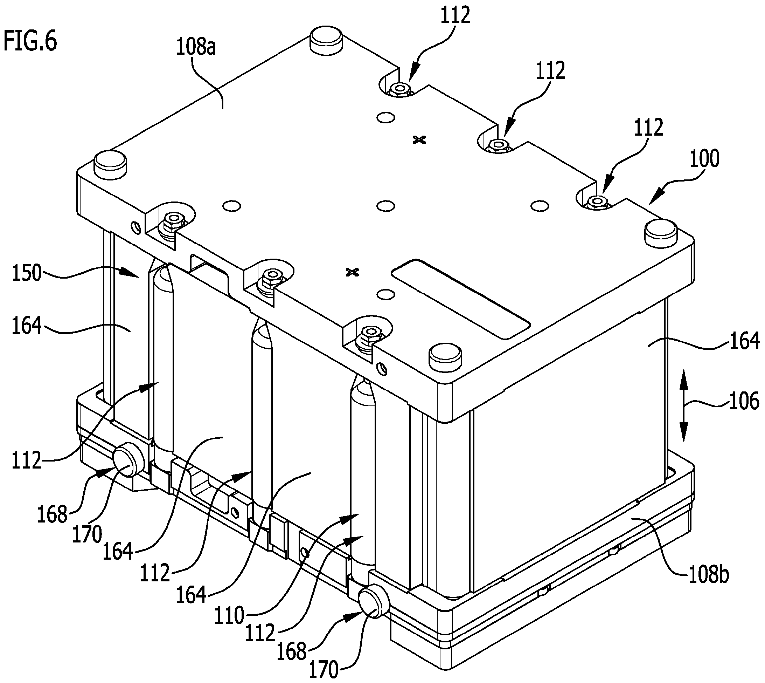

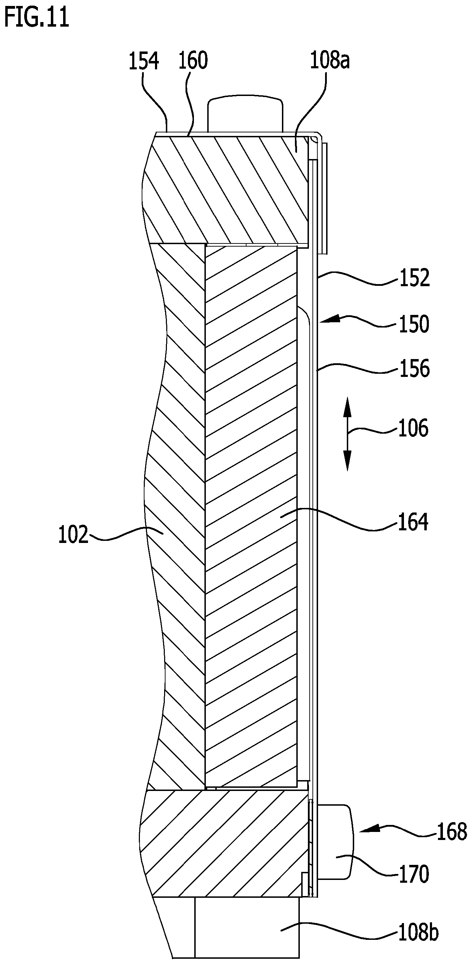

Wie aus den Fig. 6 und 11 zu ersehen ist, umfasst die Einhausung 150 vorzugsweise ein oder mehrere Schaummaterial-Elemente 164, welche zur Verringerung des freien Restvolumens innerhalb des Grundkörpers 152 der Einhausung 150 dienen und zwischen dem Brennstoffzellenstapel 102 einerseits und dem Grundkörper 152 der Einhausung 150 andererseits angeordnet sind.

Die Schaummaterial-Elemente 164 umfassen vorzugsweise ein geschlossenporiges Schaummaterial.

Die Schaummaterial-Elemente 164 können beispielsweise ein Silikonschaummaterial umfassen.

Die Schaummaterial-Elemente 164 sind vorzugsweise separat von dem Grundkörper 152 der Einhausung 150 hergestellt und im von dem Grundkörper 152 gelösten Zustand an dem Brennstoffzellenstapel 102 anordenbar, wie dies in Fig. 6 dargestellt ist.

Dabei kann insbesondere vorgesehen sein, dass zwischen jeweils zwei Spannelementen 112 der Spannvorrichtung 110 der Brennstoffzellenvorrichtung 100 jeweils ein Schaummaterial-Element 164 angeordnet ist.

Die Schaummaterial-Elemente 164 sind vorzugsweise plattenförmig, insbesondere in Form von im Wesentlichen ebenen Platten, ausgebildet.

Die Schaummaterial-Elemente 164 werden vorzugsweise aus einem Schaummaterial so herausgetrennt, insbesondere ausgeschnitten oder ausgestanzt, dass ihre Form möglichst gut an die Form jeweils eines Zwischenraums zwischen dem Brennstoffzellenstapel 102, zwei Spannelementen 112 der Spannvorrichtung 110 und dem Grundkörper 152 angepasst ist.

Das freie Restvolumen, das innerhalb der Einhausung 150 zwischen der Einhausung 150, dem Brennstoffzellenstapel 102, den Endplatten 108a, 108b und der Spannvorrichtung 110 verbleibt, ist vorzugsweise kleiner als 20 %, insbesondere kleiner als 10 %, besonders bevorzugt kleiner als 5 %, des gesamten Innenvolumens der Einhausung 150, also des Volumens, das nach außen hin durch die Schaummaterial-Elemente 164, den Grundkörper 152 und den Deckel 154 der Einhausung 150 begrenzt wird.

Das innerhalb der Einhausung 150 verbleibende freie Restvolumen ist vorzugsweise so klein, dass ein tertiärer Explosionsschutz für die Brennstoffzellenvorrichtung 100 gewährleistet ist.

Dies bedeutet, dass auch dann, wenn ein explosionsfähiges Gemisch, insbesondere ein wasserstoffhaltiges Gemisch, in dem freien Restvolumen innerhalb der Einhausung 150 vorhanden ist und dieses Gemisch tatsächlich gezündet wird, das freie Restvolumen, in dem die Explosion stattfindet, so klein und/oder so in kleine Einzelvolumina unterteilt ist, dass der Brennstoffzellenstapel 102 und die Einhausung 150 durch die Explosion nicht beschädigt werden und somit auch nach einer Explosion ihre volle Funktionsfähigkeit behalten.

Insbesondere kann vorgesehen sein, dass der Abstand zwischen der Außenseite des Brennstoffzellenstapels 102 und der Innenseite der Einhausung 150, senkrecht zur Stapelrichtung 106 genommen, im Wesentlichen überall kleiner ist als 5 mm, vorzugsweise kleiner ist als 2 mm, besonders bevorzugt kleiner ist als 1 mm.

Die Einhausung 150 ist vorzugsweise so ausgebildet, dass sie gegen das Eindringen von Schmutz und/oder Feuchtigkeit in den Innenraum der Einhausung 150 abgedichtet ist.

Insbesondere kann die Einhausung so ausgebildet sein, dass sie mindestens der Schutzart IP6X gemäß der DIN EN 60529 entspricht.

Ferner ist vorzugsweise vorgesehen, dass die Einhausung 150 so ausgebildet ist, dass sie mindestens dem Wasserschutzgrad 4, insbesondere mindestens dem Wasserschutzgrad 5, besonders bevorzugt mindestens dem Wasserschutzgrad 6, höchst bevorzugt mindestens dem Wasserschutzgrad 7, gemäß der DIN EN 60529 entspricht.

Die Einhausung 150 umfasst vorzugsweise ein Material, das mindestens der Brandschutzklasse V0 entspricht.

Besonders bevorzugt ist vorgesehen, dass die Einhausung 150 aus einem Material oder aus mehreren Materialien besteht, welche mindestens der Brandschutzklasse V0 entsprechen.

Um auch im Fehlerfall bei einer Leckage des Brennstoffzellenstapels 102 zu verhindern, dass sich innerhalb der Einhausung 150 ein Überdruck aufbaut und zu einer Gefährdung führt, weist die Einhausung 150 vorzugsweise eine Gasaustauschöffnung und/oder ein Gasaustauschventil auf, durch welche bzw. welches Gas aus dem Innenraum der Einhausung 150 in die Umgebung 166 der Einhausung 150 und der Brennstoffzellenvorrichtung 100 entweichen kann.

Um ein Abfließen von aus dem Brennstoffzellenstapel 102 austretender, sich zwischen der Einhausung 150 und dem Brennstoffzellenstapel 102 sammelnder oder in dem Zwischenraum zwischen der Einhausung 150 und dem Brennstoffzellenstapel 102 kondensierender Flüssigkeit aus der Einhausung 150 zu ermöglichen, ist vorzugsweise vorgesehen, dass die Einhausung 150 eine Flüssigkeitsaustrittsöffnung und/oder ein Flüssigkeitsaustrittsventil aufweist.

Eine solche Flüssigkeitsaustrittsöffnung und/oder ein solches Flüssigkeitsaustrittsventil kann an eine Flüssigkeitsabführleitung angeschlossen sein.

Die Flüssigkeitsabführleitung kann insbesondere als eine Rohrleitung oder als eine Schlauchleitung ausgebildet sein.

Die Flüssigkeitsabführleitung kann die Flüssigkeitsaustrittsöffnung und/oder das Flüssigkeitsaustrittsventil mit einer Flüssigkeitssammeleinrichtung außerhalb der Einhausung 150 verbinden.

Die Einhausung 150 ist an mindestens einer der Endplatten 108a, 108b, vorzugsweise an beiden Endplatten 108a, 108b, mittels jeweils mindestens einer Befestigungsanordnung 168 festgelegt.

Vorzugsweise ist die Einhausung 150 an der Endplatte 108a und/oder an der Endplatte 108b jeweils lösbar festgelegt.

Eine Befestigungsanordnung 168 kann insbesondere eine Schraube, eine Federscheibe, eine Unterlegscheibe und/oder einen Kappring umfassen.

Ferner kann die Brennstoffzellenvorrichtung 100 mindestens eine Abdecckappe 170 zum Abdecken jeweils einer Befestigungsanordnung 168, insbesondere von der Außenseite der Einhausung 150 her, umfassen.

Die Einhausung 150 ist vorzugsweise von dem Brennstoffzellenstapel 102 lösbar.

Zur Montage der vorstehend beschriebenen Einhausung 150 an dem Brennstoffzellenstapel 102 und den mittels der Spannvorrichtung 110 gegeneinander verspannten Endplatten 108a, 108b wird wie folgt vorgegangen:
Die Schaummaterial-Elemente 164 der Einhausung 150 werden an der Außenseite des Brennstoffzellenstapels 102 an den Stapel und zwischen die in der Umfangsrichtung des Brennstoffzellenstapels 102 aufeinanderfolgenden Spannelemente 112 eingelegt.

Im montierten Zustand der Brennstoffzellenvorrichtung 100 aus der Einhausung 150 herauszuführende elektrische Leitungen werden in eine jeweils hierfür vorgesehene Nut in einer der Endplatten 108a oder 108b eingelegt.

Anschließend wird der Grundkörper 152 der Einhausung 150 über die Endplatte 108a und in der Stapelrichtung 106 weiter bis zu der weiteren Endplatte 108b geschoben.

Der Deckel 154 der Einhausung 150 wird auf den Grundkörper 152 aufgesetzt.

Der Grundkörper 152 wird mittels der Befestigungsanordnungen 168, vorzugsweise lösbar, an der Endplatte 108b festgelegt, insbesondere durch Verschraubung.

Auf jede Befestigungsanordnung 168 wird eine Abdeckkappe 170 aufgesetzt, um die jeweilige Befestigungsanordnung 168 von der Außenseite der Einhausung 150 her abzudecken.

Die Abdeckkappe 170 ist dabei vorzugsweise mit einem Bestandteil der Befestigungsanordnung 168, beispielsweise mit einer Schraube der Befestigungsanordnung 168, verrastbar.

Damit ist die Montage der Einhausung 150 an den Endplatten 108a, 108b und an dem Brennstoffzellenstapel 102 abgeschlossen.

## Patentansprüche

1. Brennstoffzellenvorrichtung, umfassend
einen Brennstoffzellenstapel (102), der mehrere in einer Stapelrichtung (106) aufeinanderfolgende Brennstoffzelleneinheiten umfasst, und
zwei Endplatten (108a, 108b), zwischen denen der Brennstoffzellenstapel (102) angeordnet ist,
wobei die Brennstoffzellenvorrichtung (100) eine Einhausung (150) umfasst, welche den Brennstoffzellenstapel (102) und die Endplatten (108a, 108b) umgibt, und
wobei das freie Restvolumen, das innerhalb der Einhausung (150) zwischen der Einhausung (150), dem Brennstoffzellenstapel (102) und den Endplatten (108a, 108b) verbleibt, kleiner ist als 20 % des Innenvolumens der Einhausung (150),
**dadurch gekennzeichnet,**
**dass** die Einhausung (150) an mindestens einer Endplatte (108a, 108b) mittels mindestens einer Befestigungsanordnung (168) festgelegt ist und dass die Brennstoffzellenvorrichtung (100) mindestens eine Abdeckkappe (170) zum Abdecken einer Befestigungsanordnung (168) umfasst.

2. Brennstoffzellenvorrichtung nach Anspruch 1, **dadurch gekennzeichnet, dass** das innerhalb der Einhausung (150) verbleibende freie Restvolumen so klein ist, dass ein tertiärer Explosionsschutz für die Brennstoffzellenvorrichtung (100) gewährleistet ist, so dass auch dann, wenn ein explosionsfähiges Gemisch in dem freien Restvolumen innerhalb der Einhausung (150) vorhanden ist und dieses Gemisch tatsächlich gezündet wird, das freie Restvolumen, in dem die Explosion stattfindet, so klein und/oder so in kleine Einzelvolumina unterteilt ist, dass der Brennstoffzellenstapel (102) und die Einhausung (150) durch die Explosion nicht beschädigt werden und somit die Brennstoffzellenvorrichtung (100) auch nach einer Explosion ihre volle Funktionsfähigkeit behält.

3. Brennstoffzellenvorrichtung nach einem der Ansprüche 1 oder 2, **dadurch gekennzeichnet, dass** die Einhausung (150) so ausgebildet ist, dass sie mindestens der Schutzart IP6X gemäß der DIN EN 60529 entspricht.

4. Brennstoffzellenvorrichtung nach einem der Ansprüche 1 bis 3, **dadurch gekennzeichnet, dass** die Einhausung (150) so ausgebildet ist, dass sie mindestens dem Wasserschutzgrad 4 gemäß der DIN EN 60529 entspricht.

5. Brennstoffzellenvorrichtung nach einem der Ansprüche 1 bis 4, **dadurch gekennzeichnet, dass** der Abstand zwischen der Außenseite des Brennstoffzellenstapels (102) und der Innenseite der Einhausung (150) senkrecht zu der Stapelrichtung (106) im Wesentlichen überall kleiner ist als 5 mm.

6. Brennstoffzellenvorrichtung nach einem der Ansprüche 1 bis 5, **dadurch gekennzeichnet, dass** die Einhausung (150) ein Schaummaterial umfasst.

7. Brennstoffzellenvorrichtung nach einem der Ansprüche 1 bis 6, **dadurch gekennzeichnet, dass** die Einhausung (150) ein Außenschalenelement (156) aus einem thermoplastischen Material oder aus einem Organoblech-Material umfasst.

8. Brennstoffzellenvorrichtung nach einem der Ansprüche 1 bis 7, **dadurch gekennzeichnet, dass** die Einhausung (150) ein Material umfasst, das mindestens der Brandschutzklasse V0 entspricht.

9. Brennstoffzellenvorrichtung nach einem der Ansprüche 1 bis 8, **dadurch gekennzeichnet, dass** die Einhausung (150) einen Grundkörper (152) und einen Deckel (154) umfasst.

10. Brennstoffzellenvorrichtung nach Anspruch 9, **dadurch gekennzeichnet, dass** der Grundkörper (152) aus mehreren Schalenelementen zusammengesetzt ist.

11. Brennstoffzellenvorrichtung nach einem der Ansprüche 1 bis 10, **dadurch gekennzeichnet, dass** die Einhausung (150) eine Gasaustauschöffnung und/oder ein Gasaustauschventil aufweist.

12. Brennstoffzellenvorrichtung nach einem der Ansprüche 1 bis 11, **dadurch gekennzeichnet, dass** die Einhausung (150) eine Flüssigkeitsaustrittsöffnung und/oder ein Flüssigkeitsaustrittsventil aufweist.

## Claims

1. Fuel cell device, comprising
a fuel cell stack (102), which comprises a plurality of fuel cell units following one another in a stacking direction (106), and
two end plates (108a, 108b), between which the fuel cell stack (102) is arranged,
wherein the fuel cell device (100) comprises an enclosure (150), which surrounds the fuel cell stack (102) and the end plates (108a, 108b), and wherein the free remaining volume that remains within the enclosure (150) between the enclosure (150), the fuel cell stack (102), and the end plates (108a, 108b) is less than 20% of the internal volume of the enclosure (150),
**characterized in that**
the enclosure (150) is fixed to at least one end plate (108a, 108b) by means of at least one fastening arrangement (168), and
**in that** the fuel cell device (100) comprises at least one cover cap (170) for covering a fastening arrangement (168).

2. Fuel cell device in accordance with Claim 1, **characterized in that** the free remaining volume remaining within the enclosure (150) is so small that a tertiary explosion protection is ensured for the fuel cell device (100), such that even when an explosive mixture is present in the free remaining volume within the enclosure (150) and this mixture is indeed ignited, the free remaining volume in which the explosion takes place is so small and/or is subdivided into small individual volumes such that the fuel cell stack (102) and the enclosure (150) are not damaged by the explosion, and thus the fuel cell device (100) retains its full functionality even after an explosion.

3. Fuel cell device in accordance with either of Claims 1 or 2, **characterized in that** the enclosure (150) is configured such that it corresponds at least to the protection rating IP6X in accordance with DIN EN 60529.

4. Fuel cell device in accordance with any one of Claims 1 to 3, **characterized in that** the enclosure (150) is configured such that it corresponds at least to the water protection rating 4 in accordance with DIN EN 60529.

5. Fuel cell device in accordance with any one of Claims 1 to 4, **characterized in that** the distance between the outer side of the fuel cell stack (102) and the inner side of the enclosure (150) perpendicular to the stacking direction (106) is less than 5 mm substantially everywhere.

6. Fuel cell device in accordance with any one of Claims 1 to 5, **characterized in that** the enclosure (150) comprises a foam material.

7. Fuel cell device in accordance with any one of Claims 1 to 6, **characterized in that** the enclosure (150) comprises an outer shell element (156) made of a thermoplastic material or of an organic sheet material.

8. Fuel cell device in accordance with any one of Claims 1 to 7, **characterized in that** the enclosure (150) comprises a material that corresponds at least to the fire protection class V0.

9. Fuel cell device in accordance with any one of Claims 1 to 8, **characterized in that** the enclosure (150) comprises a base body (152) and a lid (154).

10. Fuel cell device in accordance with Claim 9, **characterized in that** the base body (152) is composed of a plurality of shell elements.

11. Fuel cell device in accordance with any one of Claims 1 to 10, **characterized in that** the enclosure (150) has a gas exchange opening and/or a gas exchange valve.

12. Fuel cell device in accordance with any one of Claims 1 to 11, **characterized in that** the enclosure (150) has a liquid outlet opening and/or a liquid outlet valve.

## Revendications

1. Dispositif à piles à combustible, comprenant :
un empilement de piles à combustible (102), qui comprend plusieurs éléments de pile à combustible se suivant les uns les autres dans une direction d'empilement (106), et
deux plaques d'extrémité (108a, 108b), entre lesquelles l'empilement de piles à combustible (102) est disposé,
dans lequel le dispositif à piles à combustible (100) comprend une enceinte (150), laquelle entoure l'empilement de piles à combustible (102) et les plaques d'extrémité (108a, 108b), et
dans lequel le volume résiduel libre, qui reste à l'intérieur de l'enceinte (150) entre l'enceinte (150), l'empilement de piles à combustible (102) et les plaques d'extrémité (108a, 108b), est inférieur à 20 % du volume intérieur de l'enceinte (150),
**caractérisé en ce**
**que** l'enceinte (150) est fixée sur au moins une plaque d'extrémité (108a, 108b) au moyen d'au moins un ensemble de fixation (168), et
**que** le dispositif à piles à combustible (100) comprend au moins un capot de recouvrement (170) destiné à recouvrir un ensemble de fixation (168).

2. Dispositif à piles à combustible selon la revendication 1, **caractérisé en ce que** le volume résiduel libre restant à l'intérieur de l'enceinte (150) est si petit qu'une protection tertiaire contre les explosions pour le dispositif à piles à combustible (100) est assurée de telle sorte que même, lorsqu'un mélange explosif est présent dans le volume résiduel libre à l'intérieur de l'enceinte (150) et que ce mélange est réellement allumé, le volume résiduel libre, dans lequel l'explosion a lieu, est également si petit et/ou est divisé en petits volumes individuels de telle sorte que l'empilement de piles à combustible (102) et l'enceinte (150) ne sont pas endommagés par l'explosion et qu'ainsi le dispositif à piles à combustible (100) conserve également après une explosion sa pleine capacité de fonctionnement.

3. Dispositif à piles à combustible selon l'une quelconque des revendications 1 ou 2, **caractérisé en ce que** l'enceinte (150) est réalisée de telle sorte qu'elle correspond au moins au degré de protection IP6X selon la norme DIN EN 60529.

4. Dispositif à piles à combustible selon l'une quelconque des revendications 1 à 3, **caractérisé en ce que** l'enceinte (150) est réalisée de telle sorte qu'elle correspond au moins à un degré de protection contre l'eau 4 selon la norme DIN EN 60529.

5. Dispositif à piles à combustible selon l'une quelconque des revendications 1 à 4, **caractérisé en ce que** la distance entre le côté extérieur de l'empilement de piles à combustible (102) et le côté intérieur de l'enceinte (150) est sensiblement inférieure de tous côtés à 5 mm de manière perpendiculaire par rapport à la direction d'empilement (106).

6. Dispositif à piles à combustible selon l'une quelconque des revendications 1 à 5, **caractérisé en ce que** l'enceinte (150) comprend un matériau en mousse.

7. Dispositif à piles à combustible selon l'une quelconque des revendications 1 à 6, **caractérisé en ce que** l'enceinte (150) comprend un élément de coque extérieur (156) composé d'un matériau thermoplastique ou d'un matériau en tôle organique.

8. Dispositif à piles à combustible selon l'une quelconque des revendications 1 à 7, **caractérisé en ce que** l'enceinte (150) comprend un matériau, qui correspond au moins à la classe de protection contre l'incendie V0.

9. Dispositif à piles à combustible selon l'une quelconque des revendications 1 à 8, **caractérisé en ce que** l'enceinte (150) comprend un corps de base (152) et un couvercle (154).

10. Dispositif à piles à combustible selon la revendication 9, **caractérisé en ce que** le corps de base (152) se compose de plusieurs éléments de coque.

11. Dispositif à piles à combustible selon l'une quelconque des revendications 1 à 10, **caractérisé en ce que** l'enceinte (150) présente une ouverture d'échange de gaz et/ou une soupape d'échange de gaz.

12. Dispositif à piles à combustible selon l'une quelconque des revendications 1 à 11, **caractérisé en ce que** l'enceinte (150) présente une ouverture de sortie de liquide et/ou une soupape de sortie de liquide.
